# EUROPÄISCHE PATENTSCHRIFT

(11) **EP 2 024 668 B1**
(45) Veröffentlichungstag und Bekanntmachung des Hinweises auf die Patenterteilung: **04.06.2014**
(21) Anmeldenummer: 07729513.7
(22) Anmeldetag: 25.05.2007
(51) Int. Cl.: F16H 63/30, F16D 13/70, F16D 28/00, F16H 48/08, F16H 48/11, F16H 48/22, F16H 48/295, F16H 48/30, F16H 48/34, F16D 121/24, F16D 125/38, F16D 27/00, B60K 17/16, F16H 48/20, F16H 48/42

(54) **GETRIEBEEINHEIT MIT WENIGSTENS EINEM LAMELLENSCHALTELEMENT**
TRANSMISSION COMPRISING AT LEAST ONE PLATE-TYPE SHIFTING ELEMENT
UNITÉ DE TRANSMISSION COMPORTANT AU MOINS UN ÉLÉMENT DE COMMANDE À LAMELLES

(30) Priorität: 30.05.2006 DE 102006025060
(43) Veröffentlichungstag der Anmeldung: 18.02.2009
(73) Patentinhaber: ZF Friedrichshafen AG, 88038 Friedrichshafen (DE)
(72) Erfinder: BÖCK, Alois, 94116 Hutthurm (DE); BAASCH, Detlef, 88048 Ailingen (DE)
(86) Internationale Anmeldenummer: PCT/EP2007/055084
(87) Internationale Veröffentlichungsnummer: WO 2007/138003

(56) Entgegenhaltungen:
- EP-A1- 0 464 719
- EP-A1- 0 546 733
- JP-A- 2005 273 801
- US-A1- 2001 047 919

## Beschreibung

Die Erfindung betrifft eine Getriebeeinheit mit wenigstens einem Lamellenschaltelement nach der im Oberbegriff des Patentanspruches 1 näher definierten Art.

Eine solche Getriebeeinheit ist beispielsweise aus der US 2001/0047919 A1 bekannt. Hierbei wird eine Einrichtung zur Axialeinstellung eines Lamellenschaltelements von einem Elektro-Motor betätigt, wobei die Einrichtung zur Axialeinstellung, welche mit einem Schwenkrad und einer verdrehfest in einem Gehäuse angeordneten Kugelrampenscheibe ausgebildet ist, mit dem Lamellenschaltelement zusammenwirkt. Eine Antriebswelle des Elektro-Motors steht dabei mit einem Zwischenrad in Eingriff, welches wiederum mit dem Schwenkrad der Einrichtung zur Axialeinstellung zusammenwirkt. Die Einrichtung zur Axialeinstellung wandelt eine rotatorische Bewegung, welche von dem Elektro-Motor auf das Schwenkrad der Einrichtung zur Axialeinstellung übertragen wird, in eine translatorische Bewegung um, welche die Innenlamellen und die Außenlamellen des Lamellenschaltelements in Reibkontakt und in Lösestellung bringen kann. Zur Umwandlung der rotatorischen Bewegung in eine translatorische Bewegung sind Kugeln in tiefenvariierenden Nuten des Schwenkrades und den damit korrespondierenden Nuten der Kugelrampenscheibe vorgesehen.

Die Kugelrampenscheibe weist an einem äußeren Rand Rastelemente auf, mittels denen die Kugelrampenscheibe an korrespondierenden Gegenelementen des Gehäuses verdrehfest festgelegt ist. Eine solche Festlegung der Kugelrampenscheibe in dem Gehäuse ist jedoch dahingehend nachteilhaft, dass zur verdrehgesicherten Festlegung der Kugelrampenscheibe in dem Gehäuse mit der Kugelrampenscheibe korrespondierende Gegenelemente im Gehäuse benötigt werden und der Einbau bzw. die Herstellung hohe Kosten verursacht.

JP 2005-273801 A offenbart eine Getriebeeinheit nach dem Oberbegriff des Anspruchs 1.

Der vorliegenden Erfindung liegt die Aufgabe zu Grunde, eine Getriebeeinheit der eingangs genannten Art derart zu gestalten, dass eine verdrehgesicherte Festlegung einer Kugelrampenscheibe einer Einrichtung zur Axialeinstellung eines Lamellenschaltelements einfach und kostengünstig unter Gewährleistung einer sicheren Funktionsweise realisiert ist.

Erfindungsgemäß wird diese Aufgabe mit einer Getriebeeinheit mit den Merkmalen des Patentanspruches 1 gelöst.

Es wird somit eine Getriebeeinheit mit wenigstens einem Lamellenschaltelement vorgeschlagen, dessen Lamellen mittels einer Einrichtung zur Axialeinstellung in Reibkontakt bringbar sind, wobei die Einrichtung zur Axialeinstellung ein eine Drehbewegung einer Antriebswelle eines Motors aufnehmendes Schwenkrad und eine die Drehbewegung des Schwenkrades in eine Axialbewegung umsetzende Kugelrampenscheibe, welche drehfest und axial verschiebbar in einem Gehäuse angeordnet ist, aufweist, und wobei erfindungsgemäß vorgesehen ist, dass die Kugelrampenscheibe an ihrem in Radialrichtung äußeren Rand mittels wenigstens einer Lasche in dem Gehäuse verdrehgesichert angeordnet ist.

Bei einer erfindungsgemäß ausgestalteten Kugelrampenscheibe mit wenigstens einer Lasche an ihrem äußeren Umfang kann die Lasche entsprechend den jeweiligen Anforderungen in ihrer Form angepasst werden, wobei bereits sehr wenige Laschen für eine gute Verdrehsicherung ausreichen.

Nach Anspruch 1 entspricht die Form der wenigstens einen Lasche der Kugelrampenscheibe wenigstens annähernd der Form von Laschen entsprechen, welche am äußeren Rand der Lamellen des Lamellenschaltelements zur verdrehgesicherten Anordnung der Lamellen in dem Gehäuse ausgebildet sind, wobei die wenigstens eine Lasche der Kugelrampenscheibe in Ausnehmungen des Gehäuses angeordnet ist, in welche die Laschen der Lamellen des Lamellenschaltelements einschiebbar sind. Somit ist die Verdrehsicherung der Kugelrampenscheibe durch die Laschen der Kugelrampenscheibe sowie die Verdrehsicherung der Lamellen durch die Laschen der Lamellen in gemeinsamen Ausnehmungen realisiert.

Die Laschen der Kugelrampenscheibe und der Lamellen können zudem mit einer Fertigungsmethode hergestellt werden, wodurch Kosten eingespart werden können.

Eine vorteilhafte Ausgestaltung der Erfindung kann vorsehen, dass in wenigstens einer Ausnehmung des Gehäuses, welches ein Getriebegehäuse darstellen kann oder ein sonstiges als Lamellenträger geeignetes Gehäuse sein kann, sowohl die wenigstens eine Lasche der Kugelrampenscheibe als auch eine Lasche der Lamellen angeordnet ist. Die Fertigung der wenigstens einen Ausnehmung gestaltet sich dabei besonders einfach, wenn sowohl die Form der Laschen der Kugelrampenscheibe sowie die Form der Laschen der Lamellen wenigstens annähernd halbrund ausgebildet ist und die wenigstens eine Ausnehmung somit einfach gebohrt werden kann.

Eine hinsichtlich der Anzahl der Laschen bei gleichzeitig guter Verdrehsicherung besonders vorteilhafte Ausgestaltung der Erfindung wird erreicht, wenn die Kugelrampenscheibe und die Lamellen in Umfangsrichtung derart versetzt zueinander angeordnet sind, dass die wenigstens eine Lasche der Kugelrampenscheibe und die Laschen der Lamellen in separaten Ausnehmungen alternierend angeordnet sind.

Die Kugelrampenscheibe kann an ihrem in Radialrichtung äußeren Rand beispielsweise mit drei bzw. sechs Laschen ausgebildet sein, welche insbesondere gleichmäßig verteilt über den Umfang angeordnet sind, so dass eine effektive Kraftübertragung von der Kugelrampenscheibe in das Gehäuse mit einer geringen Laschenzahl möglich ist. Bei einer versetzten Anordnung der Lamellen können die Lamellen des Lamellenschaltelements entsprechend drei Laschen am äußeren Rand aufweisen.

Dementsprechend können an einem die Kugelrampenscheibe und die Lamellenbremse radial umgebenden Abschnitt des Gehäuses sechs Ausnehmungen zur Aufnahme der Laschen der Kugelrampenscheibe und/oder der Lamellenbremse insbesondere gleichmäßig beabstandet zueinander ausgebildet sein.

Zur Rückstellung der Kugelrampenscheibe ist gemäß Anspruch 1 ein Federelement in denjenigen Ausnehmungen des Gehäuses angeordnet, welche eine Lasche der Kugelrampenscheibe, aber keine Lasche der Lamellenbremse aufnehmen. Die der Verdrehsicherung dienenden Laschen sind damit gleichzeitig Auflagen für Druckfedern, die die Kugelrampenscheibe in ihre Ausgangsposition drücken. Bei einer Gestaltung der Laschen als Halbrund können die zu deren Aufnahme vorgesehenen Ausnehmungen im Gehäuse gleichzeitig eine Druckfeder geeignet aufnehmen.

Wirkt die Antriebswelle des Motors mit dem Schwenkrad der Einrichtung zur Axialeinstellung mittels einer wenigstens einstufigen Stirnradstufe zusammen, so ist ein sehr einfacher Mechanismus zur Betätigung des Lamellenschaltelements realisiert.

Eine einfache und sichere Betätigung des Lamellenschaltelements kann dadurch erreicht werden, dass das Schwenkrad zur Einrichtung zur Axialeinstellung mit der Kugelrampenscheibe der Einrichtung zur Axialeinstellung mittels Wälzkörpern, insbesondere Kugeln, welche sich in tiefenvariierenden Nuten des Schwenkrades und in korrespondierend dazu angeordneten tiefenvariierenden Nuten der Kugelrampenscheibe befinden, zusammenwirkt.

Als besonders vorteilhaft hat sich dabei die Verwendung von drei Kugeln als Wälzkörper erwiesen. Da bei Verwendung einer Kugelrampenscheibe mit konstantem Teilkreisdurchmesser der Kugelbahn der maximale verfügbare Verdrehwinkel bei 360° dividiert durch die Anzahl der Kugeln liegt, kann bei einer Ausführung mit drei Kugeln der maximale Verdrehwinkel der Kugelrampenscheibe realisiert werden. Damit kann bei einem gegebenen Stellweg die Steigung der Kugelbahn verringert werden, wodurch wiederum ein kleinerer Motor zum Antrieb der Vorrichtung zur Axialeinstellung verwendet werden kann. Weiterhin ist durch die Verwendung von nur drei Kugeln der Traganteil pro Kugel maximal, wobei die Traglast im Verhältnis zur Kugelanzahl aufgrund von Fertigungstoleranzen durch weitere Kugeln nicht erhöht werden kann.

In vorteilhafter Ausgestaltung der Erfindung sind die Kugelrampenscheibe und/oder eine andererseits die Verschiebbarkeit der Lamellen begrenzende Abstützscheibe an ihrer den Lamellen zugewandten Fläche mit einem mit den Lamellen zusammenwirkenden Reibbelag ausgebildet. Damit können gegenüber herkömmlichen Lösungen Bauteile der Einrichtung zur Axialeinstellung eingespart werden, wodurch zum einen Kosten eingespart werden, zum anderen aber auch der quer zur Betätigungsrichtung der Lamellenbremse verlaufende Bauraum verkürzt wird und somit das Package optimiert wird.

Die mit einer solchen Ausgestaltung mögliche kleine Dimensionierung der Kugelrampenscheibe bietet die Möglichkeit der Herstellung der Kugelrampenscheibe mit einem Sinterwerkstoff, womit die Bearbeitung der Kugelrampenscheibe auf bestimmte lokale Bereiche beschränkt werden kann. Die Herstellungskosten für die Kugelrampenscheibe fallen dabei in vorteilhafter Weise gering aus.

Eine vorteilhafte Anwendung der Erfindung sieht vor, dass die Getriebeeinheit als Hinterachsgetriebeeinheit ausgebildet ist und zur Führung eines Antriebsmomentes von einer Antriebswelle auf zwei Abtriebswellen über eine Differenzialeinheit und eine mittels des wenigstens einen Motors zuschaltbare, stufenlos einstellbare Vorrichtung zur Beeinflussung des Verteilungsgrades des Antriebsmoments auf die Abtriebswellen ausgebildet ist, wobei die Differenzialeinheit.ein Differenzial und einen mit der Antriebswelle wirkverbundenen Differenzialkorb aufweist und die Vorrichtung zur Beeinflussung des Verteilungsgrades des Antriebsmoments eine Übersetzungsstufe aufweist, welche mit dem Differenzialkorb und einer zugeordneten Abtriebswelle wirkverbunden ist und welche mittels des Lamellenschaltelements zuschaltbar ist.

In einer alternativen Ausgestaltung der Erfindung kann neben einem Getriebegehäuse auch ein anderes als Lamellenträger ausgebildetes Gehäuse zum Einsatz kommen.

Bei einer vorteilhaften Ausgestaltung einer erfindungsgemäßen Getriebeeinheit kann es vorteilhafter Weise vorgesehen sein, dass jede Abtriebswelle mit dem Differenzial verbunden ist. Dabei kann eine besonders gute Momentenverteilung dadurch erreicht werden, dass die Vorrichtung zur Beeinflussung des Verteilungsgrades des Antriebsmomentes auf die Abtriebswellen mit zwei bezüglich einer Getriebemittelachse, welche senkrecht zu einer Längsachse der Abtriebswellen verläuft, wenigstens annähernd symmetrisch angeordneten Torque-Vectoring-Einheiten ausgebildet ist, wobei die Torque-Vectoring-Einheiten jeweils eine Übersetzungsstufe aufweisen, welche mit dem Differenzialkorb und der zugeordneten Abtriebswelle wirkverbunden ist.

Weitere Vorteile und vorteilhafte Weiterbildungen der Erfindung ergeben sich aus den Patentansprüchen und eines unter Bezugnahme auf die Zeichnung prinzipmäßig beschriebenen Ausführungsbeispiels.

Es zeigt:
- Fig. 1: eine schematische Schnitidarstellung einer Hinterachsgetriebeeinheit eines Kraftfahrzeugs mit einem Lamellenschaltelement, welches durch eine eine Kugelrampenscheibe aufweisende Einrichtung zur Axialeinstellung betätigt werden kann;
- Fig. 2: eine dreidimensionale Ansicht der Kugelrampenscheibe der Fig. 1, wobei die Kugelrampenscheibe an ihrem äußeren Rand drei Laschen aufweist und
- Fig. 3: einen prinzipmäßigen Schnitt durch eine Bremsvorrichtung der Hinterachsgetriebeeinheit mit dem Lamellenschaltelement und der Einrichtung zur Axialeinstellung, welche die Kugelrampenscheibe der Fig. 2 aufweist.

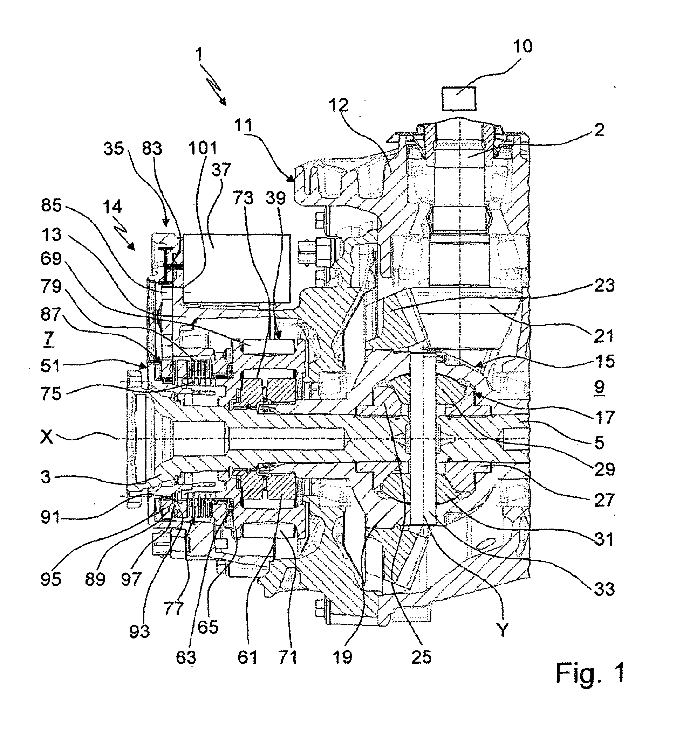

In Fig. 1 ist ein Bereich einer Getriebeeinheit 1 gezeigt, welche ein von einer nur schematisch dargestellten Antriebsmaschine bzw. Brennkraftmaschine 10 bereitgestelltes, über eine Antriebswelle 2 übertragenes Antriebsmoment auf eine erste Abtriebswelle 3 und eine hierzu koaxial und bezüglich der Abtriebswelle 2 synimetrisch angeordnete zweite Abtriebswelle 5 verteilt.

Die Getriebeeinheit 1 ist zum Einbau in ein Kraftfahrzeug vorgesehen und ist in der gezeigten Ausführung als Hinterachsgetriebeeinheit ausgebildet, wobei jedoch auch denkbar ist, dass eine im Wesentlichen analog aufgebaute Getriebeeinheit als Vorderachsgetriebeeinheit eingesetzt wird. Ebenfalls denkbar ist ein Einsatz der vorliegenden Getriebeeinheit sowohl als Vorderachsgetriebeeinheit als auch als Hinterachsgetriebeeinheit, beispielsweise bei einem allradgetriebenen Kraftfahrzeug.

Die Abtriebswellen 3 bzw. 5, welche um eine gemeinsame Längsachse X drehbar gelagert sind, sind an ihren freien Enden jeweils mit einem nicht näher dargestellten Fahrzeugrad verbunden, wobei sich im Einbauzustand der Hinterachsgetriebeeinheit 1 ein Fahrzeugrad bezüglich der ersten Abtriebswelle 3 auf einer in Fahrzeugrichtung betrachtet linken Getriebeseite 7 und ein Fahrzeugrad bezüglich der zweiten Abtriebswelle 5 auf einer rechten Getriebeseite 9 befindet.

Die Hinterachsgetriebeeinheit 1 ist in einem Getriebegehäuse 11 angeordnet, welches mit einem im Wesentlichen die Antriebswelle 2 umgebenden vorderen Getriebegehäuseteil 12, mit einem der linken Getriebeseite 7 zugeordneten seitlichen Getriebegehäuseteil 13, aus dem die erste Abtriebswelle 3 seitlich herausragt, und mit einem nicht näher dargestellten der rechten Getriebeseite 9 zugeordneten seitlichen Getriebegehäuseteil, aus dem die zweite Abtriebswelle 5 seitlich herausragt, ausgebildet ist.

Die Hinterachsgetriebeeinheit 1 verteilt das von der Antriebswelle 2 übertragene Antriebsmoment auf die beiden Abtriebswellen 3 und 5 und kann dabei auch eine ungleiche Momentenverteilung auf die beiden Abtriebswellen 3 und 5 bewirken und somit aktiv die Fahreigenschaften verbessern. Hierzu wird das Antriebsmoment von der Antriebswelle 2 in eine Differenzialeinheit 15 eingeleitet, welche mit einem Differenzial 17 und einem Differenzialkorb 19 ausgebildet und mit einer Vorrichtung 14 zur Beeinflussung des Antriebsmoments auf die Abtriebswellen 3 und 5 verbunden ist. Zur Wirkverbindung zwischen der Antriebswelle 2 und dem Differentialkorb 19 steht ein fest mit der Antriebswelle 2 verbundenes Antriebsritzel 21 mit einem fest mit dem Differenzialkorb 19 verbundenen Tellerrad 23 in Eingriff, wobei der Differenzialkorb 19 drehbar um die Längsachse X gelagert ist und sich in dem Getriebegehäuse 11 abstützt.

Das Differenzial 17 ist in an sich bekannter Bauweise mit zwei mit der jeweiligen Abtriebswelle 3 bzw. 5 verbundenen abtriebsseitigen Kegelrädern 25 und 27 und mit zwei mit den beiden Kegelrädern 25 und 27 kämmenden antriebsseitigen Kegelrädern 29 und 31 ausgebildet. Die beiden antriebsseitigen Kegelräder 29 und 31 sind fest auf einem Bolzen 33 angeordnet, welcher in dem Differenzialkorb 19 bezüglich einer Drehung um die Längsachse X festgelegt und bezüglich einer Drehung um eine senkrecht zu der Längsachse X durch den Bolzen 33 verlaufenden Getriebemittelachse Y drehbar gelagert ist.

Die Fig. 1 zeigt zwei Ausführungsbeispiele der antriebsseitigen Kegelräder 29 und 31 und der damit zusammenwirkenden abtriebsseitigen Kegelräder 25 und 27, welche jeweils miteinander in Eingriff stehen und zwischen welchen der Fachmann entsprechend dem jeweiligen Anwendungsfall eine Alternative auswählen kann.

Wird von der Brennkraftmaschine 10 ein Antriebsmoment über die Antriebswelle 2 übertragen, so wird dieses über das Antriebsritzel 21 auf das Tellerrad 23 und den fest damit verbundenen Differenzialkorb 19 übertragen. Mittels des mit dem Differenzialkorb 19 verbundenen Bolzens 33 des Differenzials 17 wird das Antriebsmoment auf die antriebsseitigen Kegelräder 29 und 31 des Differenzials 17 übertragen, welche das Antriebsmoment wiederum auf die abtriebsseitigen Kegelräder 25 und 27 des Differenzials 17 leiten und somit die Abtriebswellen 3 und 5 antreiben. Liegt keine Differenzdrehzahl zwischen den beiden Abtriebswellen 3 und 5 vor, so drehen sich die antriebsseitigen Kegelräder 29 und 31 mit dem Bolzen 33 ausschließlich um die Längsachse X. Sollte eine Abtriebswelle im Einbauzustand beispielsweise aufgrund der sich bei einer Kurvenfahrt unterschiedlich schnell drehenden Fahrzeugräder schneller rotieren als die andere, dann drehen sich die antriebsseitigen Kegelräder 29 und 31 zum Ausgleich der Drehzahldifferenz um den Bolzen 33, wobei der Bolzen 33 weiterhin das Antriebsmoment über seine Drehung um die Längsachse X auf die beiden Abtriebswellen 3, 5 weiterleitet.

Neben einem Ausgleich einer unterschiedlichen Drehzahl der beiden Abtriebswellen 3 und 5 kann mit der Hinterachsgetriebeeinheit 1 eine unterschiedliche Momentenaufteilung auf die beiden Abtriebswellen 3 und 5 erreicht werden. Dazu ist die Vorrichtung 14 zur Beeinflussung des Antriebsmoments auf die Abtriebswellen 3 bzw. 5 mit zwei symmetrisch zu der Getriebemittelachse Y angeordneten baugleichen Torque-Vectoring-Einheiten vorgesehen, wobei von den zwei Torque-Vectoring-Einheiten in Fig. 1 nur die der linken Getriebeseite 7 zugeordnete Torque-Vectoring-Einheit 35 dargestellt ist, welche im Folgenden beschrieben wird. Die Torque-Vectoring-Einheiten sind in dem Getriebegehäuse 11 angeordnet und werden vorliegend von jeweils einem zugeordneten, zuschaltbaren Elektro-Motor 37 stufenlos eingestellt und betätigt.

Wie bei der dargestellten Torque-Vectoring-Einheit 35 zu sehen ist, weist diese einen als Übersetzungsstufe 39 ausgebildeten Planetensatz ohne Hohlrad und eine von dem Elektro-Motor 37 betätigbare Bremsvorrichtung 51 auf, wobei die Übersetzungsstufe 39 mit zwei Sonnenrädern 61 und 63 ausgebildet ist, wovon ein erstes Sonnenrad 61 fest mit dem Differenzialkorb 19 und ein zweites Sonnenrad 63 fest mit der Abtriebswelle 3 verbunden ist. Die Sonnenräder 61 und 63 wirken mit vorliegend drei drehend auf einem Planetenträger 65 gelagerten Planeten zusammen, von denen zwei jeweils eine durchgängige Verzahnung 73 aufweisende Planeten 69 und 71 ersichtlich sind.

Die Bremsvorrichtung 51 weist ein als Lamellenbremse 77 ausgebildetes Lamellenschaltelement auf. Die bezüglich ihrer Übertragungsfähigkeit stufenlos einstellbare Lamellenbremse 77 weist als Lamellen an dem Planetenträger 65 angeordnete Innenlamellen 75 auf, welche mit in dem Getriebegehäuse 11 festgelegten Außenlamellen 79 durch ihre axiale Verstellbarkeit derart zusammenwirken, dass sie in oder aus einem Reibkontakt bringbar sind.

Der Elektro-Motor 37 betätigt die Bremsvorrichtung 51 vorliegend über ein von seiner Antriebswelle 83 angetriebenes, getriebegehäusefest gelagertes Zwischenrad 85, welches mit der Antriebswelle 83 des Elektro-Motors 37 in Eingriff steht und eine Einrichtung 87 zur Axialeinstellung der Lamellenbremse 77 betätigt. Die Einrichtung 87 zur Axialeinstellung der Lamellenbremse 77 ist bei der gezeigten Ausführung aus einem Schwenkrad 89, welches mit dem Zwischenrad 85 in Eingriff steht und wie das Zwischenrad 85 auf der der Getriebemittelachse Y abgewandten Seite der Lamellenbremse 77 angeordnet ist, und einer zwischen dem Schwenkrad 89 und der Lamellenbremse 77 angeordneten Kugelrampenscheibe 91 aufgebaut. Das Zwischenrad 85 dient zur Überbrückung des Achsabstandes zwischen dem Elektro-Motor 37 und dem Schwenkrad 89. Die Überbrückung wird durch eine Zähnezahl des Elektro-Motors 37 und eine Zähnezahl des Schwenkrades 89 bestimmt. Es bleibt dem Fachmann überlassen, zur Überbrückung des Abstandes zwischen dem Elektro-Motor und der Längsachse neben der im Ausführungsbeispiel als Zwischenrad ausgebildeten einstufigen Stirnradstufe entsprechend den insbesondere bauräumlichen Bedingungen auch eine zweistufige oder mehrstufige Stirnradstufe einzusetzen.

In einem offenen Zustand der Lamellenbremse 77 läuft die Übersetzungsstufe 39 ohne Momentenübertragung um die Längsachse X um. Wird über den Elektro-Motor 37 eine Reibverbindung in der Lamellenbremse 77 ausgelöst, so wird aus dem Antriebsmoment ein auf die jeweilige Abtriebswelle 3 bzw. 5 wirkendes Torque-Vectoring-Moment erzeugt. Dies geschieht durch eine Abstützung des Planetenträgers 65 über die Bremsvorrichtung 51 in dem Getriebegehäuse 11. Es wird somit eine Momentenübertragung von der Antriebswelle 2 über den Differenzialkorb 19 und von dort mittels des Planetenträgers 65 von dem ersten Sonnenrad 61 auf das jeweilige mit der Abtriebswelle 3 bzw. 5 verbundene zweite Sonnenrad 63 erzeugt, mittels welcher eine unterschiedliche Momentenverteilung auf die erste Abtriebswelle 3 und die zweite Abtriebswelle 5 erreicht werden kann.

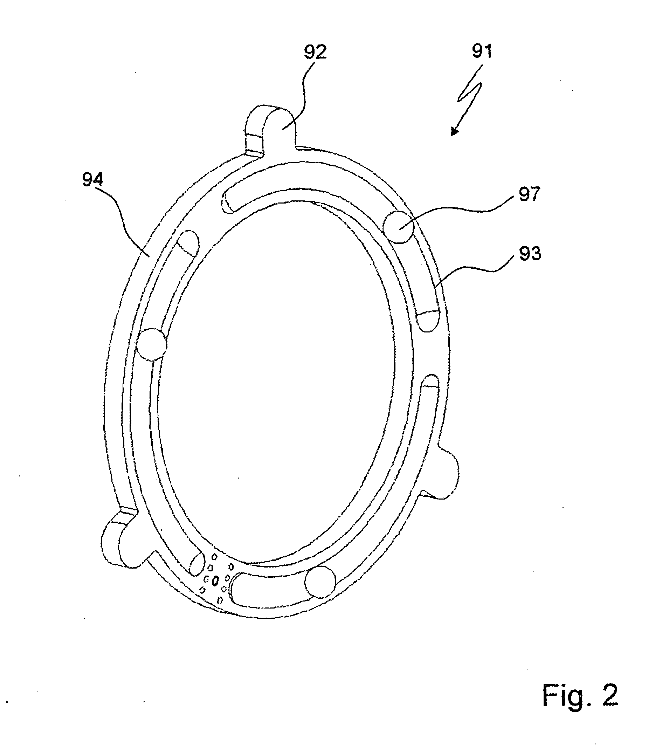

Die in Fig. 2 näher dargestellte Kugelrampenscheibe 91 der Einrichtung 87 zur Axialeinstellung weist vorliegend an ihrem in Radialrichtung äußeren Rand 94 drei Laschen 92 auf, welche in ihrer halbkreisförmigen Form der Form von Laschen 104 der Außenlamellen 79 der Lamellenbremse 77 gleichen, welche gleichmäßig über dem Umfang der Kugelrampenscheibe 91 verteilt angeordnet sind und dabei einen Winkel von 120° zueinander bilden.

Die Anzahl der Laschen der Kugelrampenscheibe kann in einer alternativen Ausgestaltung der Kugelrampenscheibe aber auch variieren, wobei die Kugelrampenscheibe insbesondere sechs Laschen aufweisen kann.

Des Weiteren sind in der Kugelrampenscheibe 91, drei in ihrer Tiefe variierende Nuten 93 ausgebildet, welche im Einbauzustand der Kugelrampenscheibe 91 mit ebenfalls in ihrer Tiefe variierenden Nuten 95 des Schwenkrades 89 korrespondieren. Zwischen den Nuten 93, 95 der Kugelrampenscheibe 91 und des Schwenkrades 89 sind drei als Kugeln 97 ausgebildete Wälzkörper angeordnet. Ein Verdrehen des Schwenkrades 89 resultiert somit in einer Axialbewegung der Kugelrampenscheibe 91, durch welche die Lamellenbremse 77 entweder geöffnet oder geschlossen werden kann.

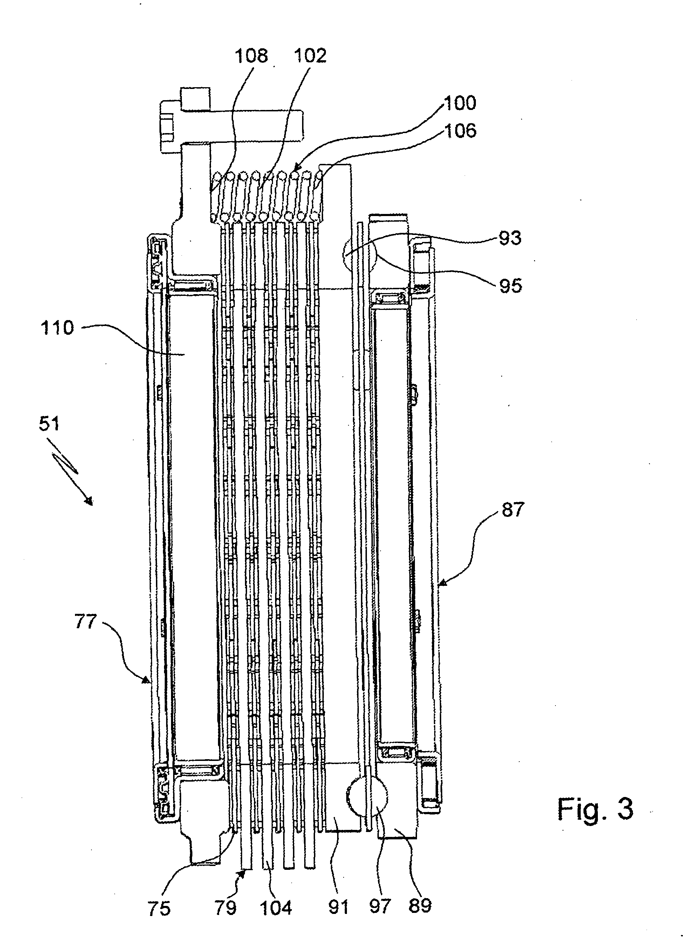

Die Fig. 3 zeigt die Bremsvorrichtung 51 mit der Lamellenbremse 77 und der Einrichtung 87 zur Axialeinstellung in Alleinstellung. Im Einbauzustand der Bremsvorrichtung 51 sind die Laschen 92 der Kugelrampenscheibe 91 in vorliegend sechs radial um die Abtriebswellen 3 bzw. 5 angeordneten, Bohrungen darstellenden Ausnehmungen 102 des Getriebegehäuses 11 angeordnet, in welche neben den Laschen 92 der Kugelrampenscheibe 91 auch die Laschen 104 der Außenlamellen 79 der Lamellenbremse 77, zur Verdrehsicherung einschiebbar sind.

Die Außenlamellen 79 weisen vorliegend jeweils drei gleichmäßig an ihrem Umfang verteilte Laschen 104 auf, welche gegenüber den drei gleichförmigen Laschen 92 der Kugelrampenscheibe 91 auf Lücke, d. h. um 60° gegeneinander verdreht, in den sechs Ausnehmungen 102 des Getriebegehäuses 11 angeordnet sind.

In denjenigen Ausnehmungen 102 des Getriebegehäuses 11, welche eine Lasche 92 der Kugelrampenscheibe 91, aber keine Lasche 104 der Außenlamellen 79 der Lamellenbremse 77 aufweisen, ist jeweils ein zur Öffnung der Lamellen bremse 77 nach vorheriger Betätigung dienendes Federelement 100 angeordnet, welches sich an einem ersten Ende 106 an einer Lasche 92 der Kugelrampenscheibe 91 und an einem zweiten Ende 108 an einer getriebegehäusefesten Abstützscheibe 110 abstützt und radial genau über dem Lamellenpaket angeordnet ist.

Bei einer alternativen Ausgestaltung der Erfindung mit einer Kugelrampenscheibe mit zum Beispiel sechs Laschen, welche jeweils in einer Ausnehmung des Getriebegehäuses angeordnet sind, können entsprechend ebenfalls in denjenigen Ausnehmungen, welche keine Lasche der Lamellen der Lamellenbremse aufnehmen, Federelemente angeordnet werden.

Zur Einsparung von axialem Bauraum sind bei der gezeigten Ausführung die Kugelrampenscheibe 91 und die gegenüberliegende Abstützscheibe 110 zugleich mit Reibbelägen als Gegenpartner zu den angrenzenden Lamellen ausgebildet und stellen damit selbst Endlamellen dar.

### Bezugszeichen

- 1: Hinterachsgetriebeeinheit
- 2: Antriebswelle
- 3: erste Abtriebswelle
- 5: zweite Abtriebswelle
- 7: linke Getriebeseite
- 9: rechte Getriebeseite
- 10: Brennkraftmaschine
- 11: Getriebegehäuse
- 12: vorderer Getriebegehäuseteil
- 13: seitlicher Getriebegehäuseteil
- 14: Vorrichtung zur Beeinflussung des Verteilungsgrades des Antriebsmoments auf die Abtriebswellen
- 15: Differenzialeinheit
- 17: Differenzial
- 19: Differenzialkorb
- 21: Antriebsritzel
- 23: Tellerrad
- 25: linkes abtriebsseitiges Kegelrad
- 27: rechtes abtriebsseitiges Kegelrad
- 29: oberes antriebsseitiges Kegelrad
- 31: unteres antriebsseitiges Kegelrad
- 33: Bolzen
- 35: Torque-Vectoring-Einheit
- 37: Elektro-Motor
- 39: Übersetzungsstufe
- 51: Bremsvorrichtung
- 61: erstes Sonnenrad
- 63: zweites Sonnenrad
- 65: Planetenträger
- 69: Planet
- 71: Planet
- 73: Verzahnung Planet
- 75: Innenlamellen
- 77: Lamellenbremse
- 79: Außenlamellen
- 83: Antriebswelle Motor
- 85: Zwischenrad
- 87: Einrichtung zur Axialeinstellung
- 89: Schwenkrad
- 91: Kugelrampenscheibe
- 92: Laschen der Kugelrampenscheibe
- 93: Nuten der Kugelrampenscheibe
- 94: äußerer Rand der Kugelrampenscheibe
- 95: Nuten des Schwenkrades
- 97: Wälzkörper, Kugeln
- 100: Federelement
- 102: Ausnehmungen des Getriebegehäuses
- 104: Laschen der Lamellen
- 106: erstes Ende des Federelements
- 108: zweites Ende des Federelements
- 110: Abstützscheibe

- X: Längsachse
- Y: Getriebemittelachse

## Patentansprüche

1. Getriebeeinheit mit wenigstens einem Lamellenschaltelement (77), dessen Lamellen (75, 79) mittels einer Einrichtung (87) zur Axialeinstellung in Reibkontakt bringbar sind, wobei die Einrichtung (87) zur Axialeinstellung ein eine Drehbewegung einer Antriebswelle (83) eines Motors (37) aufnehmendes Schwenkrad (89) und eine die Drehbewegung des Schwenkrades (89) in eine Axialbewegung umsetzende Kugelrampenscheibe (91), welche drehfest und axial verschiebbar in einem Gehäuse (11) angeordnet ist, aufweist, wobei die Kugelrampenscheibe (91) an ihrem in Radialrichtung äußeren Rand (94) mittels wenigstens einer Lasche (92) in dem Gehäuse (11) verdrehgesichert angeordnet ist, wobei die Form der wenigstens einen Lasche (92) der Kugelrampenscheibe (91) wenigstens annähernd der Form von Laschen (104), welche am äußeren Rand der Lamellen (79) des Lamellenschaltelements (77) zur verdrehgesicherten Anordnung der Lamellen (79) in dem Gehäuse (11) ausgebildet sind, entspricht, wobei die wenigstens eine Lasche (92) der Kugelrampenscheibe (91) in Ausnehmungen (102) des Gehäuses (11) angeordnet ist, in welche die Laschen (104) der Lamellen (79) des Lamellenschaltelements (77) einschiebbar sind und **dadurch gekennzeichnet, dass** ein Federelement (100) in denjenigen Ausnehmungen (102) des Gehäuses (11) angeordnet ist, welche eine Lasche (92) der Kugelrampenscheibe (91), aber keine Lasche (104) des Lamellenschaltelements (77) aufnehmen.

2. Getriebeeinheit nach Anspruch 1, **dadurch gekennzeichnet, dass** in wenigstens einer Ausnehmung (102) des Gehäuses (11) sowohl die wenigstens eine Lasche (92) der Kugelrampenscheibe (91) als auch eine Lasche (104) der Lamellen (79) angeordnet ist.

3. Getriebeeinheit nach Anspruch 2, **dadurch gekennzeichnet, dass** die Kugelrampenscheibe (91) und die Lamellen (79) in Umfangsrichtung derart versetzt zueinander angeordnet sind, dass die wenigstens eine Lasche (92) der Kugelrampenscheibe (91) und die Laschen (104) der Lamellen (79) in separaten Ausnehmungen (102) angeordnet sind.

4. Getriebeeinheit nach einem der Ansprüche 1 bis 3, **dadurch gekennzeichnet, dass** die Kugelrampenscheibe (91) an ihrem in Radialrichtung äußeren Rand (94) drei Laschen (92) aufweist.

5. Getriebeeinheit nach einem der Ansprüche 1 bis 3, dadurch **ge- kennzeichnet,** dass die Kugelrampenscheibe (91) an ihrem in Radialrichtung äußeren Rand (94) sechs Laschen (92) aufweist.

6. Getriebeeinheit nach einem der Ansprüche 1 bis 5, **dadurch gekennzeichnet, dass** wenigstens ein Teil der Lamellen (79) des Lamellenschaltelements (77) drei Laschen (104) am äußeren Rand aufweist.

7. Getriebeeinheit nach einem der Ansprüche 1 bis 6, **dadurch gekennzeichnet, dass** an einem die Kugelrampenscheibe (91) und das Lamellenschaltelement (77) radial umgebenden Abschnitt des Gehäuses (11) sechs Ausnehmung (102) zur Aufnahme der Laschen (92) der Kugelrampenscheibe (91) und/oder des Lamellenschaltelements (77) insbesondere gleichmäßig beabstandet zueinander ausgebildet sind.

8. Getriebeeinheit nach einem der Ansprüche 1 bis 7, dadurch g e - **kennzeichnet,** dass die Antriebswelle (83) des Motors (37) mit dem Schwenkrad (89) der Einrichtung (87) zur Axialeinstellung mittels einer wenigstens einstufigen Stirnradstufe (85) zusammenwirkt, wobei das Schwenkrad (89) der Einrichtung (87) zur Axialeinstellung mit der Kugelrampenscheibe (91) der Einrichtung (87) zur Axialeinstellung mittels Wälzkörpern, insbesondere Kugeln (97), welche sich in tiefenvariierenden Nuten (95) des Schwenkrades (89) und in korrespondierend dazu angeordneten tiefenvariierenden Nuten (93) der Kugelrampenscheibe (91) befinden, zusammenwirkt.

9. Getriebeeinheit nach einem der Ansprüche 1 bis 8, dadurch **ge- kennzeichnet,** dass die Getriebeeinheit (1) zur Führung eines Antriebsmomentes von einer Antriebswelle (2) auf zwei Abtriebswellen (3, 5) über eine Differenzialeinheit (15) und eine mittels des wenigstens einen Motors (37) zuschaltbare, stufenlos einstellbare Vorrichtung (14) zur Beeinflussung des Verteilungsgrades des Antriebsmoments auf die Abtriebswellen (3, 5) ausgebildet ist, wobei die Differenzialeinheit (15) ein Differenzial (17) und einen mit der Antriebswelle (2) wirkverbundenen Differenzialkorb (19) aufweist und die Vorrichtung (14) zur Beeinflussung des Verteilungsgrades des Antriebsmoments eine Übersetzungsstufe (39) aufweist, welche mit dem Differenzialkorb (19) und einer zugeordneten Abtriebswelle (3 bzw. 5) wirkverbunden ist und welche mittels des Lamellenschaltelements (77) zuschaltbar ist.

10. Getriebeeinheit nach Anspruch 12, **dadurch gekennzeichnet, dass** jede Abtriebswelle (3, 5) mit dem Differenzial (17) verbunden ist.

## Claims

1. Transmission comprising at least one plate-type shifting element (77), the plates (75, 79) of which can be brought into frictional contact by means of a device (87) for axial setting, the device (87) for axial setting having a pivoting wheel (89), receiving a rotational movement of a drive shaft (83) of an engine (37), and a ball-ramp disc (91), which converts the rotational movement of the pivoting wheel (89) into an axial movement and is arranged fixedly in terms of rotation and axially displaceably in a housing (11), the ball-ramp disc (91) being arranged so as to be secured against rotation at its radially outer margin (94) in the housing (11) by means of at least one tab (92), the shape of the at least one tab (92) of the ball-ramp disc (91) corresponding at least approximately to the shape of tabs (104) which are formed at the outer margin of the plates (79) of the plate-type shifting element (77) of the rotationally secured arrangement of the plates (79) in the housing (11), the at least one tab (92) of the ball-ramp disc (91) being arranged in recesses (102) of the housing (11), into which recesses the tabs (104) of the plates (79) of the plate-type shifting element (77) can be pushed, **characterized in that** a spring element (100) is arranged in those recesses (102) of the housing (11) which receive a tab (92) of the ball-ramp disc (91), but no tab (104) of the plate-type shifting element (77).

2. Transmission according to Claim 1, **characterized in that** both the at least one tab (92) of the ball-ramp disc (91) and a tab (104) of the plates (79) are arranged in at least one recess (102) of the housing (11).

3. Transmission according to Claim 2, **characterized in that** the ball-ramp disc (91) and the plates (79) are arranged so as to be offset to one another in the circumferential direction in such a way that the at least one tab (92) of the ball-ramp disc (91) and the tabs (104) of the plates (79) are arranged in separate recesses (102).

4. Transmission according to one of Claims 1 to 3, **characterized in that** the ball-ramp disc (91) has three tabs (92) at its radially outer margin (94).

5. Transmission according to one of Claims 1 to 3, **characterized in that** the ball-ramp disc (91) has six tabs (92) at its radially outer margin (94).

6. Transmission according to one of Claims 1 to 5, **characterized in that** at least some of the plates (79) of the plate-type shifting element (77) have three tabs (104) at the outer margin.

7. Transmission according to one of Claims 1 to 6, **characterized in that** six recesses (102) for receiving the tabs (92) of the ball-ramp disc (91) and/or of the plate-type shifting element (77) are formed, in particular so as to be spaced apart from one another uniformly, on a portion of the housing (11) which radially surrounds the ball-ramp disc (91) and the plate-type shifting element (77).

8. Transmission according to one of Claims 1 to 7, **characterized in that** the drive shaft (83) of the engine (37) cooperates with the pivoting wheel (89) of the device (87) for axial setting by means of an at least single-stage spur wheel stage (85), the pivoting wheel (89) of the device (87) for axial setting cooperating with the ball-ramp disc (91) of the device (87) for axial setting by means of rolling bodies, in particular balls (97), which are located in grooves (95) of varying depth of the pivoting wheel (89) and in grooves (93) of varying depth of the ball-ramp disc (91) which are arranged correspondingly thereto.

9. Transmission according to one of Claims 1 to 8, **characterized in that** the transmission (1) is designed for routing a drive torque from a drive shaft (2) to two driven shafts (3, 5) via a differential unit (15) and a continuously adjustable device (14), connectable by means of the at least one engine (37), for influencing the degree of distribution of the drive torque to the driven shafts (3, 5), the differential unit (15) having a differential (17) and a differential cage (19) operatively connected to the drive shaft (2), and the device (14) for influencing the degree of distribution of the drive torque having a step-up stage (39) which is operatively connected to the differential cage (19) and to an assigned driven shaft (3 or 5) and which is connectable by means of the plate-type shifting element (77).

10. Transmission according to Claim 12, **characterized in that** each driven shaft (3, 5) is connected to the differential (17).

## Revendications

1. Unité de transmission comportant au moins un élément de commutation à disques (77) dont les disques (75, 79) peuvent être amenés en contact de friction au moyen d'un dispositif (87) de réglage axial, le dispositif (87) de réglage axial comprenant une roue pivotante (89) recevant un mouvement de rotation d'un arbre d'entraînement (83) d'un moteur (37) et un disque à rampes à billes (91) convertissant le mouvement de rotation de la roue pivotante (89) en un mouvement axial, lequel disque à rampes à billes est disposé de manière solidaire en rotation et déplaçable axialement dans un boîtier (11), le disque à rampes à billes (91) étant disposé, au niveau de son bord (94) extérieur dans la direction radiale, de manière bloquée en rotation dans le boîtier (11) au moyen d' au moins une patte (92), la forme de l'au moins une patte (92) du disque à rampes à billes (91) correspondant au moins approximativement à la forme de pattes (104) qui sont réalisées sur le bord extérieur des disques (79) de l'élément de commutation à disques (77) en vue de la disposition de manière bloquée en rotation des disques (79) dans le boîtier (11), l'au moins une patte (92) du disque à rampes à billes (91) étant disposée dans des évidements (102) du boîtier (11) dans lesquels les pattes (104) des disques (79) de l'élément de commutation à disques (77) peuvent être insérées, et **caractérisée en ce qu'**un élément ressort (100) est disposé dans les évidements (102) du boîtier (11) qui reçoivent une patte (92) du disque à rampes à billes (91) mais ne reçoivent aucune patte (104) de l'élément de commutation à disques (77).

2. Unité de transmission selon la revendication 1, **caractérisée en ce que** non seulement l'au moins une patte (92) du disque à rampes à billes (91) mais aussi une patte (104) des disques (79) sont disposées dans au moins un évidement (102) du boîtier (11).

3. Unité de transmission selon la revendication 2, **caractérisée en ce que** le disque à rampes à billes (91) et les disques (79) sont disposés de manière décalée les uns par rapport aux autres dans la direction périphérique, de telle sorte que l'au moins une patte (92) du disque à rampes à billes (91) et les pattes (104) des disques (79) soient disposées dans des évidements séparés (102).

4. Unité de transmission selon l'une quelconque des revendications 1 à 3, **caractérisée en ce que** le disque à rampes à billes (91) comprend trois pattes (92) sur son bord (94) extérieur dans la direction radiale.

5. Unité de transmission selon l'une quelconque des revendications 1 à 3, **caractérisée en ce que** le disque à rampes à billes (91) comprend six pattes (92) sur son bord (94) extérieur dans la direction radiale.

6. Unité de transmission selon l'une quelconque des revendications 1 à 5, **caractérisée en ce qu'**au moins une partie des disques (79) de l'élément de commutation à disques (77) comprennent trois pattes (104) sur le bord extérieur.

7. Unité de transmission selon l'une quelconque des revendications 1 à 6, **caractérisée en ce que** six évidements (102) pour recevoir les pattes (92) du disque à rampes à billes (91) et/ou de l'élément de commutation à disques (77) sont réalisés en particulier de manière espacée régulièrement les uns par rapport aux autres sur une portion du boîtier (11) entourant radialement le disque à rampes à billes (91) et l'élément de commutation à disques (77).

8. Unité de transmission selon l'une quelconque des revendications 1 à 7, **caractérisée en ce que** l'arbre d'entraînement (83) du moteur (37) coopère, au moyen d'un étage à pignon droit (85) à au moins un étage, avec la roue pivotante (89) du dispositif (87) de réglage axial, la roue pivotante (89) du dispositif (87) de réglage axial coopérant avec le disque à rampes à billes (91) du dispositif (87) de réglage axial, au moyen de corps de roulement, en particulier de billes (97), qui se trouvent dans des rainures (95) de profondeur variable de la roue pivotante (89) et dans des rainures (93) de profondeur variable, disposées de manière correspondant à celles-ci, du disque à rampes à billes (91).

9. Unité de transmission selon l'une quelconque des revendications 1 à 8, **caractérisée en ce que** l'unité de transmission (1) est réalisée pour le guidage d'un couple d'entraînement d'un arbre d'entraînement (2) à deux arbres de sortie (3, 5) par le biais d'une unité différentielle (15) et d'un dispositif (14) réglable de manière continue, pouvant être raccordé au moyen de l'au moins un moteur (37), pour influencer le degré de distribution du couple d'entraînement aux arbres de sortie (3, 5), l'unité différentielle (15) comprenant un différentiel (17) et une coquille de différentiel (19) en liaison fonctionnelle avec l'arbre d'entraînement (2), et le dispositif (14) pour influencer le degré de distribution du couple d'entraînement comprenant un étage de multiplication (39) qui est relié fonctionnellement à la coquille de différentiel (19) et à un arbre de sortie (3 ou 5) associé et qui peut être raccordé au moyen de l'élément de commutation à disques (77).

10. Unité de transmission selon la revendication 12, **caractérisée en ce que** chaque arbre de sortie (3, 5) est relié au différentiel (17).
